# EUROPEAN PATENT SPECIFICATION

(11) **EP 2 811 825 B1**
(45) Date of publication and mention of the grant of the patent: **22.03.2017**
(21) Application number: 13746556.3
(22) Date of filing: 10.01.2013
(51) Int. Cl.: A01M 1/02, A01M 1/10, A01M 1/20, A01M 1/22

(54) **INSECT CATCHER AND APPLICATION**
INSEKTENFÄNGER UND ANWENDUNG
PIÈGE À INSECTE ET APPLICATION

(30) Priority: 06.02.2012 DK 201200093
(43) Date of publication of application: 17.12.2014
(73) Proprietor: Fischer, Maria, 7741 Frøstrup (DK)
(72) Inventor: Fischer, Maria, 7741 Frøstrup (DK)
(74) Representative: Holme Patent A/S
(86) International application number: PCT/DK2013/000004
(87) International publication number: WO 2013/117194

(56) References cited:
- WO-A1-92/17060
- WO-A1-99/35908
- US-A- 4 953 320
- US-A- 5 205 064
- US-A- 5 595 018
- US-A- 5 595 018
- US-A- 5 799 436
- US-A1- 2003 070 345
- US-A1- 2003 192 229

## Description

The invention relates to an insect catcher for catching and killing houseflies. The insect catcher includes at least one core placed in connection with an insect killing device .

The invention also relates to the application of insect catcher.

Insects often pose a nuisance, for example in farming, where not least flies can pose a big problem in animal facilities.

The flies are bothersome for both animals and humans but can also be disease carriers of serious diseases and are therefore sought to be eliminated from modern animal facilities.

Several types of fly catchers exist, based on different techniques, including types which try to attract the flies with a special light, in order to subsequently kill the flies, when they search towards the light, by having the flies pass a high voltage network, on their way, with a sufficient voltage to kill the insects.

It has been found, however, that there are some drawbacks of this known technique, including that especially houseflies can not be attracted efficiently by the hitherto known fly catchers, which apply light as means of attraction, which means that the hitherto known insect / fly catchers can not reduce the number of flies to an acceptable low level.

US 5099598 A (CARTER) describes an insect catcher, especially for catching ants. The insect catcher includes means for heating of, for example, a heating element, which is able to generate a temperature between 87 °F and 95 °F (30,5 °C to 35 °C) in order to attract insects (ants) to the insect catcher. The insect catcher furthermore has means for heating of for instance a heating element to a temperature high enough to kill an insect (ant), for example 400°F (204°C).

WO9217060 relates to an insect trap for exterminating mosquitoes and other insects, which feed on the blood of their victims. The insect trap has a body having a heat source within it for attracting insects and an electrified grid for exterminating the attracted insects. The interior of the body has either selectively distributed heat conductive or heat reflective material or both within it whereby heat may be radiated from the body according to a pattern.

The insect killing system of US2003192229 is optimized for mosquitoes by simulating the breathing of, and body heat emitted by, animals. A single resistive heat element warms air to a thermostatically controlled preselected temperature of about 100 degrees Fahrenheit ((37,8°C).

US5595018 also relates to a mosquito killing system. A thermostat maintains a single heat emitting tube in an operating temperature range between 100 to 120 degrees Fahrenheit (37,8°C -46.6°C).

The mosquito and biting insect attracting apparatus known from US2003070345 also includes a single heat element in form of a propane burner. To aid attracting mosquitoes and biting insects a source of carbon dioxide and a source of a chemical biting insect attractant are also included. A structure around the propane burner is heated by the burner to a temperature that is similar to that of a small animal, such as 95 to 115 degrees Fahrenheit (35°C -46.1 °C). This temperature are kept substantially constant to lure the mosquitoes and biting insects.

It has however been found that the known insect catcher has the drawback that the number of insects, which become attracted by the insect catcher is not large enough to keep the number of insects down to an acceptable level.

It is therefore an object of the invention to improve the known technique and application.

The object of the invention is achieved by an insect catcher of the in the introduction to claim 1 stated type, which is characterized in that the core includes built in electrical heating elements whereby the at least one core can be heated in at least one area to generate a temperature of at least 60 degrees Celsius, and be heated in at least one other area in connected to said area to generate a temperature between 20 and 60 degrees Celsius.

In this way it thus becomes possible to efficiently attract and kill flies, since they seek towards those areas of the insect catcher's core, which is placed in connection to the area with the highest stated temperature.

Further appropriate embodiments for the insect catcher are stated in claims 2 to 8.

As mentioned, the invention also relates to the application of the insect catcher for catching and killing flies including in buildings such as homes and animal facilities.

Hereby it becomes possible to achieve an acceptable reduction of the fly occurrence in for example animal facilities with a subsequent lowered risk of outbreak and contagion from serious diseases.

The invention will now be explained more fully with reference to the drawing, in which:

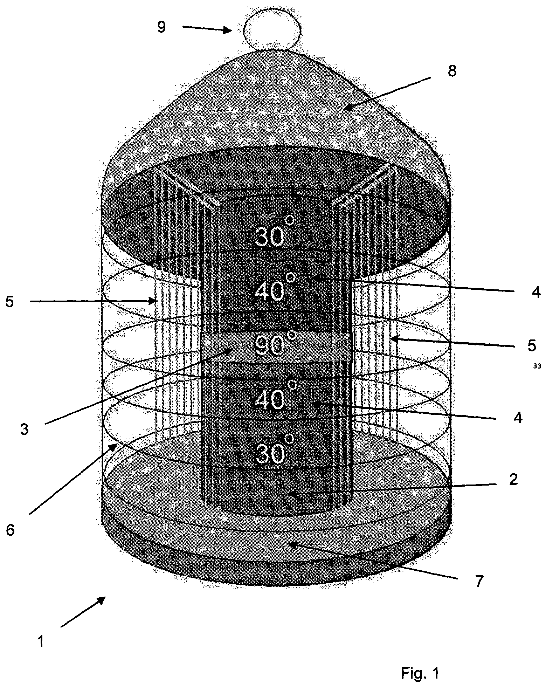

Fig. 1 shows a principle sketch of an insect catcher, which by application of a heated core attracts especially flies, where the core is enclosed by a high voltage network, which kills the flies when they come in contact with the network.

In fig. 1 is with 1 shown a principle sketch of an insect catcher according to the invention.

The insect catcher 1 includes a core 2, which has one or more built in electrical heating elements whereby the core can be heated in at least one area 3 to a temperature of at least 60 degrees Celsius and where there in connection to the area 3 is at least one area 4, which can be heated to a temperature between 20 and 60 degrees Celsius.

Tests have shown that especially flies including houseflies can efficiently be attracted by the stated temperatures, where the flies seek towards the highest temperatures in such a way that they will land and / or place themselves in the areas 4, which are connected to the areas 3 with the highest temperatures, but which have a lower temperature, preferably between 30 and 40 degrees Celsius as indicated on fig. 1.

From the carried out tests, it has been found to be appropriate that the core 2 in at least one area 4 can generate a temperature between 20 and 60 degrees Celsius preferably between 30 and 50 degrees Celsius, more preferably 40 degrees Celsius.

It is a special characteristic of the insect catcher 1, that the core 2 is placed in connection with an insect killing device.

In fig. 1 is shown a preferred embodiment of an insect catcher 1 where the insect killing device consists of an electrical high voltage network 5, which kills the insects when they come in contact with the network.

The in fig. 1 shown high voltage network is from safety considerations enclosed by a protective network 6, which prevents that for example children can touch the high voltage network 5.

The insect catcher 1 is in fig. 7, in the shown preferred embodiment, provided with a reservoir 7 for collection of killed insects.

The reservoir 7 consists, in the shown embodiment, a part of the bottom of the insect catcher 1, and can be manufactured such that it can easily be dismantled in order to remove insect remains.

From fig. 1 is furthermore seen that the insect catcher 1 is provided with a top 8, which is preferably waterproof and that the insect catcher 1 is provided with items 9 such as screw eyes or rings for hanging of the insect catcher 1.

The insect catcher 1 can be provided with energy from the grid, batteries or from renewable energy sources such as solar cells.

Other types of insect killing devices can be connected, than the one shown in fig. 1, which are based on an electrical high voltage grid.

For example, the insect catcher can be provided with adhesive agent based killing devices or devices which apply chemical and / or biological killing techniques.

The insect catcher can be manufactured from environmentally friendly reusable materials.

It is a part of the invention that the insect catcher 1 is used for catching and killing flies including in buildings such as homes and animal facilities.

The insect catcher 1 can have other shapes than the one shown in fig. 1 and can be built from for instance modules and the insect catcher 1 can be manufactured with accessories, which automatically cleans the insect catcher 1 of killed insect remains.

The insect catcher 1 can furthermore be controlled by for example a computer, whereby the created temperatures in the core 2, can continuously be adjusted with a view to continuously optimise the efficiency of the insect catcher 1 as a function of for example geographical placement, time of year, lighting conditions, humidity and / or insect species, which is primarily desired to be killed.

With the invention, it becomes possible to reduce the number of flies, including houseflies, in a simple, efficient and inexpensive way to a hitherto unachievable low level in for example animal facilities.

## Claims

1. Insect catcher (1) for catching and killing houseflies , the insect catcher (1) includes at least one core (2) placed in connection with an insect killing device, the core (2) including built in electrical heating elements whereby the at least one core (2) can be heated in at least one first area (4) to generate a temperature between 20 and 60 degrees Celsius **characterised in that** the core (2) can be heated in at least one other area (3) in connection to the first area (4) to generate a temperature of at least 60 degrees Celsius.

2. Insect catcher (1) according to claim 1 **characterized in that** the core (2) in at least one area (4) can generate a temperature between 20 and 60 degrees Celsius preferably between 30 and 50 degrees Celsius more preferably 40 degrees Celsius.

3. Insect catcher (1) according to claim 1 or 2 **characterized in that** the temperatures, which are generated in one or more cores (2) can be adjusted.

4. Insect catcher (1) according to one or more of claims 1 to 3 **characterized in that** the insect killing device consists of an electrical high voltage system (5).

5. Insect catcher (1) according to claim 4 **characterized in that** the electrical high voltage system (5) is enclosed by a safety cover (6).

6. Insect catcher (1) according to one or more of claims 1 to 5 **characterized in that** the insect catcher (1) is provided with a reservoir (7) for collection of killed insects.

7. Insect catcher (1) according to one or more of claims 1 to 6 **characterized in that** the insect catcher (1) is provided with a top (8), which is preferably waterproof and by the insect catcher (1) being provided with items (9) such as screw eyes or rings for hanging.

8. Insect catcher (1) according to one or more of claims 1 to 7 **characterized in that** the insect catcher (1) can be provided with electricity from the grid, batteries or from renewable energy sources such as solar cells.

9. Use of the insect catcher (1) according to one or more of claims 1 to 8 for catching and killing houseflies in buildings such as homes and animal facilities.

## Patentansprüche

1. Insektenfänger(1) zum Fangen und Töten von Stubenfliegen, wobei der Insektenfänger (1) wenigstens einen in Verbindung mit einer Insektentötungseinrichtung angeordneten Kern (2) mit eingebauten elektrischen Heizelementen aufweist, wodurch der wenigstens eine Kern (2) in wenigstens einem ersten Bereich (4) beheizt werden kann, um eine Temperatur zwischen 20 °C und 60 °C zu erzeugen,
**dadurch gekennzeichnet, dass**
der Kern (2) in wenigstens einem anderen Bereich (3) in Verbindung mit dem ersten Bereich (4) beheizt werden kann, um eine Temperatur von wenigstens 60 °C zu erzeugen.

2. Insektenfänger (1) nach Anspruch 1, **dadurch gekennzeichnet, dass** der Kern (2) in wenigstens einem Bereich (4) eine Temperatur zwischen 20 °C und 60 °C, bevorzugt zwischen 30 °C und 50 °C und weiter bevorzugt 40 °C erzeugen kann.

3. Insektenfänger (1) nach Anspruch 1 oder 2, **dadurch gekennzeichnet, dass** die Temperaturen, die in einem oder in mehreren Kernen (2) erzeugt werden, eingestellt werden können.

4. Insektenfänger (1) nach einem oder mehreren der Ansprüche 1 bis 3, **dadurch gekennzeichnet, dass** die Insektentötungseinrichtung aus einem elektrischen Hochspannungssystem (5) besteht.

5. Insektenfänger (1) nach Anspruch 4, **dadurch gekennzeichnet, dass** das elektrische Hochspannungssystem (5) durch eine Sicherheitsabdeckung (6) umschlossen wird.

6. Insektenfänger (1) nach einem oder mehreren der Ansprüche 1 bis 5, **dadurch gekennzeichnet, dass** der Insektenfänger (1) mit einem Reservoir (7) zur Sammlung der getöteten Insekten versehen ist.

7. Insektenfänger (1) nach einem oder mehreren der Ansprüche 1 bis 6, **dadurch gekennzeichnet, dass** der Insektenfänger (1) mit einer Oberseite (8) versehen ist, die vorzugsweise wasserdicht ist, und dass der Insektenfänger (1) mit Elementen (9) zum Aufhängen versehen ist, wie Augenschrauben oder Ringen.

8. Insektenfänger (1) nach einem oder mehreren der Ansprüche 1 bis 7, **dadurch gekennzeichnet, dass** der Insektenfänger (1) mit Strom aus dem Netz, aus Batterien oder aus erneuerbaren Energiequellen, wie etwa Solarzellen, versorgt werden kann.

9. Verwendung des Insektenfängers (1) nach einem oder mehreren der Ansprüche 1 bis 8 zum Fangen und Töten von Stubenfliegen in Gebäuden, wie etwa Häusern und Tieranlagen.

## Revendications

1. Dispositif de capture d'insectes (1) pour capturer et pour tuer des mouches domestiques, le dispositif de capture d'insectes (1) englobant au moins une partie centrale (2) mise en communication avec un dispositif destiné à tuer les insectes, la partie centrale (2) englobant des éléments incorporés faisant office de chauffage électrique, par lesquels ladite au moins une partie centrale (2) peut être chauffée dans au moins une première zone (4) pour générer une température entre 20 et 60 °C, **caractérisé en ce que** la partie centrale (2) peut être chauffée dans au moins une autre zone (3) mise en communication avec la première zone (4) pour générer une température d'au moins 60 °C.

2. Dispositif de capture d'insectes (1) selon la revendication 1, **caractérisé en ce que** la partie centrale (2) dans au moins une zone (4) peut générer une température entre 20 et 60 °C, de préférence entre 30 et 50 °C, de manière plus préférée de 40 °C.

3. Dispositif de capture d'insectes (1) selon la revendication 1 ou 2, **caractérisé en ce que** les températures qui sont générées dans une ou plusieurs parties centrales (2), peuvent être réglées.

4. Dispositif de capture d'insectes (1) selon une ou plusieurs des revendications 1 à 3, **caractérisé en ce que** le dispositif destiné à tuer les insectes est constitué d'un système électrique à haute tension (5).

5. Dispositif de capture d'insectes (1) selon la revendication 4, **caractérisé en ce que** le système électrique à haute tension (5) est entouré d'une enceinte sous la forme d'un revêtement de sécurité (6).

6. Dispositif de capture d'insectes (1) selon une ou plusieurs des revendications 1 à 5, **caractérisé en ce que** le dispositif de capture d'insectes (1) est muni d'un réservoir (7) pour récolter les insectes tués.

7. Dispositif de capture d'insectes (1) selon une ou plusieurs des revendications 1 à 6, **caractérisé en ce que** le dispositif de capture d'insectes (1) est muni d'une partie supérieure (8) qui est de préférences étanche à l'eau et **en ce que** le dispositif de capture d'insectes (1) est muni d'ustensiles (9) tels que des vis à oeillets ou des anneaux pour sa suspension.

8. Dispositif de capture d'insectes (1) selon une ou plusieurs des revendications 1 à 7, **caractérisé en ce que** le dispositif de capture d'insectes (1) peut être alimenté en électricité à partir de la grille, d'accumulateurs ou à partir de sources d'énergie renouvelable telles que des cellules solaires.

9. Utilisation du dispositif de capture d'insectes (1) selon une ou plusieurs des revendications 1 à 8, pour capturer et tuer des mouches domestiques dans des bâtiments, tels que des maisons et des animaleries.
